# EUROPEAN PATENT APPLICATION

(11) **EP 2 515 604 A1**
(43) Date of publication of application: **24.10.2012**
(21) Application number: 10837649.2
(22) Date of filing: 16.12.2010
(51) Int. Cl.: H04W 88/10

(54) **RELAY DEVICE**

(30) Priority: 17.12.2009 JP 2009286656
(71) Applicant: NTT DoCoMo, Inc., Tokyo 100-6150 (JP)
(72) Inventor: WATANABE, Takayuki, Tokyo 100-6150 (JP); SHIMAZU, Yoshitsugu, Tokyo 100-6150 (JP); OYANE, Hidehiko, Tokyo 100-6150 (JP); TANIGAWA, Daisuke, Tokyo 100-6150 (JP)
(74) Representative: HOFFMANN EITLE
(86) International application number: PCT/JP2010/072623
(87) International publication number: WO 2011/074624

(57) **Abstract**

A relay device 100 includes a first connecting unit configured to be connected to a REC21 via a logical link 11h, a second connecting unit configured to be connected to a REC22 via a logical link L12h, a radio equipment device connecting unit configured to be connected to RE30 via a logical link L21h. Further, the relay device 100 includes a data migrating unit configured to migrate the data between the logical link L11h and the logical link 12h and between the logical link L12h and the logical link L21h. The logical link L21h is shared by the data which is transmitted and received by the REC 21, 22, and the data migrating unit migrates the data according to a predetermined standardized interface specification (CPRI).

## Description

### TECHNICAL FIELD

The present invention relates to a relay device which connects a radio equipment device (RE) and a radio equipment controller (REC).

### BACKGROUND ART

In recent years, an interface specification between a radio equipment device (RE) which transmits and receives a signal to and from a mobile station and a radio equipment controller (REC) which executes control of the radio equipment device is standardized by the Common Public Radio Interface (CPRI) (see, for example, non-patent document 1).

According to the interface specification, the compatibility allowing RE and REC manufactured by different vendors to be easily connected to each other can be secured.

### PRIOR ART DOCUMENT

### Non-patent Document

Non-patent document 1 : CPRI Specification V4.0, [online], June, 2008,[retrieved on April 1, 2009], the Internet <URL: http://www.cpri.info/downloads/CPRI_v_4_0_2008-06-30.pdf>

### SUMMARY OF THE INVENTION

Meanwhile, in a mobile communication system, in a period of transition to a new radio communication scheme, a period occurs in which a system according to a conventional radio communication scheme, e.g., the third-generation mobile communication scheme (hereinafter, 3G) which is standardized by the 3GPP and a system according to a new radio communication scheme, e.g., the Long Term Evolution (hereinafter, LTE) which is standardized in the 3GPP coexist at the same time.

In this case, the RE can be used both in the 3G and LTE, while the REC is dedicated for each system. Accordingly, if it is tried to connect the RE and the REC according the above-described CPRI, a RE/REC system for the 3G and a RE/REC system for the LTE have to be prepared separately. Thus, there is a problem that the RE cannot be efficiently utilized.

Of course, it can be relatively easily realized that the RE is used in multiple systems by providing a relay device having an original specification different from the interface specification of the CPRI between the RE and the REC. However, the adoption of the original specification naturally makes it difficult to secure the above-described compatibility.

In this regard, an objective of the present invention is to provide a relay device in which the standardized interface specification connecting a radio equipment device (RE) and a radio equipment controller (REC) is used, while RECs of multiple mobile communication systems having different radio communication schemes can share the RE.

In order to solve the above problem, the present invention includes the following features. The first feature of the present invention is summarized in that a relay device (Relay device 100)connected to: a radio equipment device (RE30∼ configured to transmit and receive a radio signal (Radio signal RS) to and from a mobile station (Mobile station 200); a first controller (REC21) configured to control the radio equipment device according to a first radio communication scheme (3G); and a second controller (REC22) configured to control the radio equipment device according to a second radio communication scheme (LTE) different from the first radio communication scheme, and configured to relay data transmitted and received between the radio equipment device and the first controller and between the radio equipment device and the second controller, the relay device comprising: a first connecting unit (REC connecting unit 101) configured to be connected to the first controller via a first logical link (Logical link L11h); a second connecting unit (REC connecting unit 103) configured to be connected to the second controller via a second logical link (Logical link L12h) ; a radio equipment device connecting unit (RE connecting unit 105) configured to be connected to the radio equipment device via a shared logical link (Logical link L21h) ; and a data migrating unit (Data migrating unit 111) configured to migrate the data between the first logical link and the shared logical link and between the second logical link and the shared logical link, wherein the shared logical link is shared by the data which is transmitted and received by the first controller and the second controller, and the data migrating unit migrates the data according to a predetermined standardized interface specification (CPRI).

The second feature of the present invention is according to the first feature and is summarized in that the relay device includes an identifier processing unit configured to add an identifier to the data, the identifier identifying either the first radio communication scheme or the second radio communication scheme.

The third feature of the present invention is according to the second feature and is summarized in that the identifier processing unit determines a destination of the data to be relayed based on the identifier contained in the data received from the radio equipment device.

The fourth feature of the present invention is according to the first feature and is summarized in that the transmission control is performed based on a LAPB based on an HDLC in the first logical link, the second logical link, the shared logical link, and the LAPB is a single link procedure to define only one logical link for one physical link.

### BRIEF DESCRIPTION OF THE DRAWINGS

[Fig. 1] Fig. 1 is a diagram showing an overall schematic configuration of a radio base station 10 according to an embodiment of the invention.
[Fig. 2] Fig. 2 is a diagram showing a configuration of a physical link and a logical link according to the embodiment of the invention.
[Fig. 3] Fig. 3 is a functional block configuration diagram of a relay device 100 according to the embodiment of the invention.
[Fig. 4] Fig. 4 is a functional block configuration diagram showing details of a relay processing unit 110 according to the embodiment of the invention.
[Fig. 5] Fig. 5 is a diagram showing a protocol stack according to the embodiment of the invention.
[Fig. 6] Fig. 6 is a table showing an example of an identifier given for each data type in layer 3 according to the embodiment of the invention.
[Fig. 7] Fig. 7 is a diagram showing an example of identifying data when the identifier for each data type in the layer 3 according to the embodiment of the invention is used.
[Fig. 8] Fig. 8 is a table showing an example of setting up a transmission rate of HDLC in the logical link according to the embodiment of the invention.
[Fig. 9] Fig. 9 is a graph showing an example of a change in a data amount in a shared logical link (a logical link L21h) according to the embodiment of the invention.

### MODES FOR CARRYING OUT THE INVENTION

Hereinafter, an embodiment of the invention is described below. Specifically, the description is given of (1) Overall Schematic Configuration of Radio Base Station, (2) Configuration of Physical Link and Logical Link, (3) Functional Block Configuration of Relay Device, (4) Processing of Data Migrating Unit 111, (5) Processing of Identifier Processing Unit 113, (6) Processing of Rate Setting unit 115, (7) Operations and Effects, and (8) Other Embodiments.

In the following description of the drawings, same or similar reference numerals are given to denote same or similar portions. Note that the drawings are merely schematically shown and proportions of sizes and the like are different from actual ones.

Thus, specific sizes and the like should be judged by referring to the description below. In addition, there are of course included portions where relationships or percentages of sizes of the drawings are different with respect to one another.

### (1) Overall Schematic Configuration of Radio Base Station

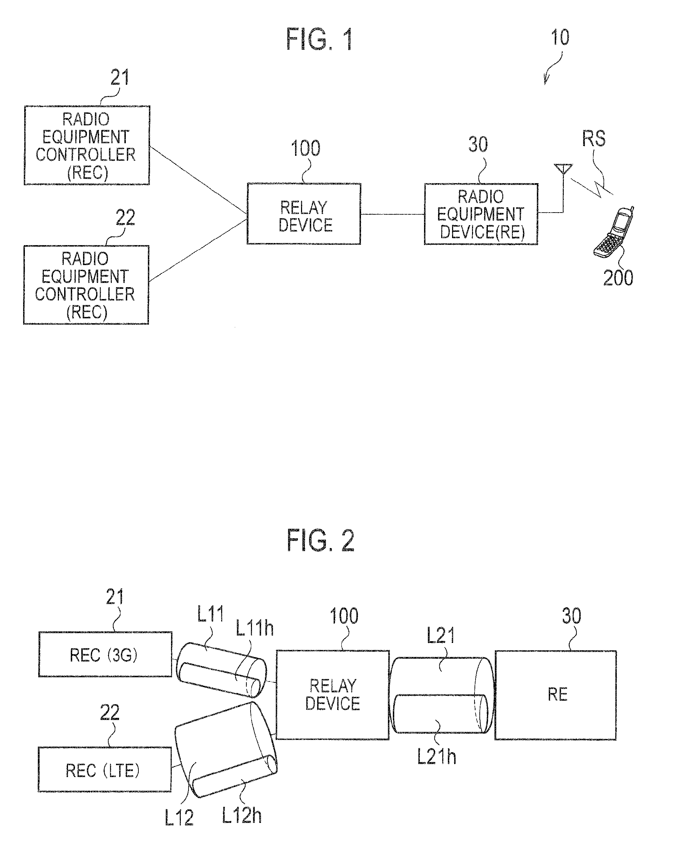

Fig. 1 is a diagram showing an overall schematic configuration of a radio base station 10 according to an embodiment. As shown in Fig. 1, the radio base station 10 includes a radio equipment controller 21 (hereinafter, REC 21), a radio equipment controller 22 (REC 22), a radio equipment device 30 (hereinafter, RE 30) and a relay device 100.

The REC 21 controls the RE 30 according to the third-generation mobile communication system (3G) standardized in the 3GPP. In the present embodiment, the REC 21 constitutes a first controller configured to control the RE 30 according a first radio communication scheme (3G).

The REC 22 controls the RE 30 according to the Long Term Evolution (LTE) standardized in the 3GPP. In the present embodiment, the REC 22 constitutes a second controller configured to control the RE 30 according a second radio communication scheme (LTE) which is different from the first radio communication scheme.

The RE 30 transmits and receives a radio signal RS within a regulated frequency band (e.g., 2 GHz) to or from a mobile station 200. Specifically, the RE 30 transmits a radio signal RS to the mobile station 200 and also receives a radio signal RS from the radio base station 200 based on the control from the REC 21 or REC 22.

Functions and the interface specification of the REC 21, REC 22, RE 30 are standardized by the Common Public Radio Interface (CPRI).

The relay device 100 is connected to each of the REC 21 and the REC 22 via a physical line using an optical interface (an optical line) or a physical line using an electrical interface (an electrical line). Or, the relay device 100 is connected to the RE 30 via an optical line or an electrical line.

The relay device 100 relays data which is transmitted and received between the RE 30 and the REC 21 and between the RE 30 and the REC 22.

### (2) Configuration of Physical Link and Logical Link

Fig. 2 shows the configuration of a physical link and a logical link which are established between each of the REC 21 and 22 and the relay device 100 and between the RE 30 and the relay device 100.

As shown in Fig. 2, a physical link L11 of a layer 1 level is established between the REC 21 and the relay device 100. Also, a logical link L11h (a first logical link) of a layer 2 level is established on the physical link L11.

Similarly, a physical link L12 of a layer 1 level is established between the REC 22 and the relay device 100. Also, a logical link L12h (a second logical link) of a layer 2 level is established on the physical link L12.

A physical link L21 of a layer 1 level is established between the RE 30 and the relay device 100. Also, a logical link L21h (a shared logical link) of a layer 2 level is established on the physical link L21. The logical link L21h is shared by the data which is transmitted to and received from the REC 21 and the REC 22.

The logical link L11h, the logical link L12h, and the logical link L21h performs transmission control based on Link Access Procedure Balanced (LAPB) based on High-level Data Link Control Procedure (HDLC). Also, in the embodiment, the LAPB is not Multi-Link Procedure (MLP) but Single Link Procedure (SLP) which defines only one logical link for one physical link.

### (3) Functional Block Configuration of Relay Device

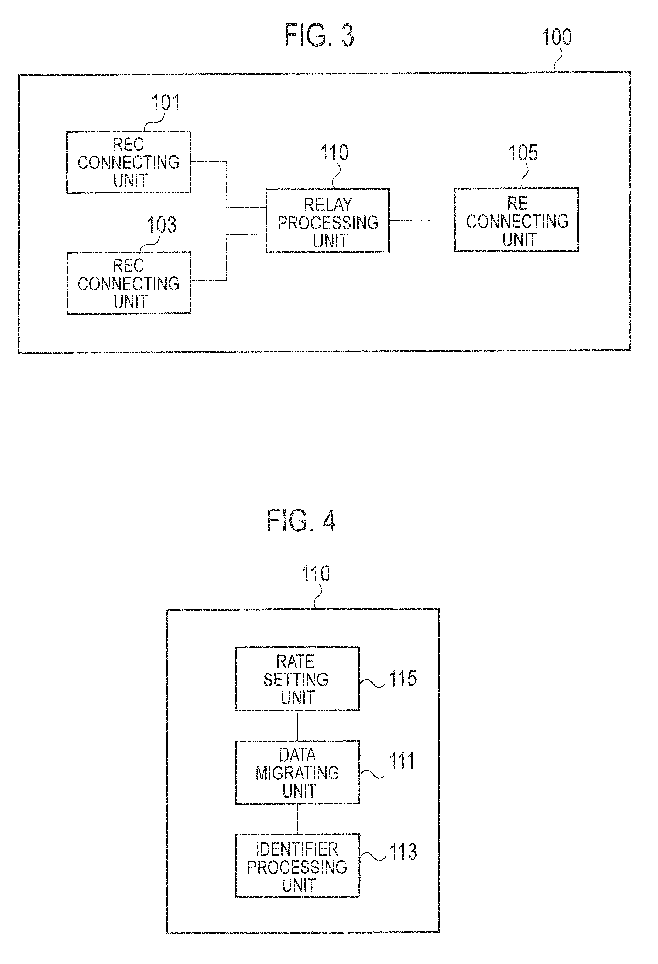

Fig. 3 is a functional block configuration diagram of the relay device 100. As shown in Fig. 3, the relay device 100 includes a REC connecting unit 101, a REC connecting unit 103, a RE connecting unit 105, and a relay processing unit 110.

The REC connecting unit 101 (a first connecting unit) is connected to the REC 21. Specifically, the REC connecting unit 101 is connected to the REC 21 via the physical link L11 and the logical link L11h.

The REC connecting unit 103 (a second connecting unit) is connected to the REC 22. Specifically, the REC connecting unit 103 is connected to the REC 22 via the physical link L12 and the logical link L12h.

The RE connecting unit 105 (a radio equipment device connecting unit) is connected to the RE 30. Specifically, the RE connecting unit 105 is connected to the RE 30 via the physical link L21 and the logical link L21h.

The relay processing unit 110 relays data which is transmitted by the REC 21 and the REC 22 to the RE 30. Also, the relay processing unit 110 relays data which is transmitted by the RE 30 to the REC 21 or the REC 22.

Fig. 4 is a functional block configuration diagram showing details of the relay processing unit 110. As shown in Fig. 4, the relay processing unit 110 has a data migrating unit 111, an identifier processing unit 113, and a rate setting unit 115.

The data migrating unit 111 migrates data which is transmitted and received between the REC 21 and the REC 22 between the logical link L11h and the logical link L21h and between the logical link L12h and the logical link L21h. The data migrating unit 111 migrates the data according to the predetermined standardized interface specification (CPRI). Note that the specific processing of the data migrating unit 111 is described later.

The identifier processing unit 113 adds an identifier, which identifies the 3G or LTE, to the data which is received from the REC 21 and the REC 22. Also, the identifier processing unit 113 determines a relay destination (the REC 21 or the REC 22) of the data based on the identifier contained in the data which is received from the RE 30 and notifies the data migrating unit 111 of the determination result. Note that the specific processing of the identifier processing unit 113 is described later.

The rate setting unit 115 sets transmission rates of the logical link L11h, the logical link L12h, and the logical link L21h. Note that, the specific processing of the rate setting unit 115 is described later.

### (4) Processing of Data migrating unit 111

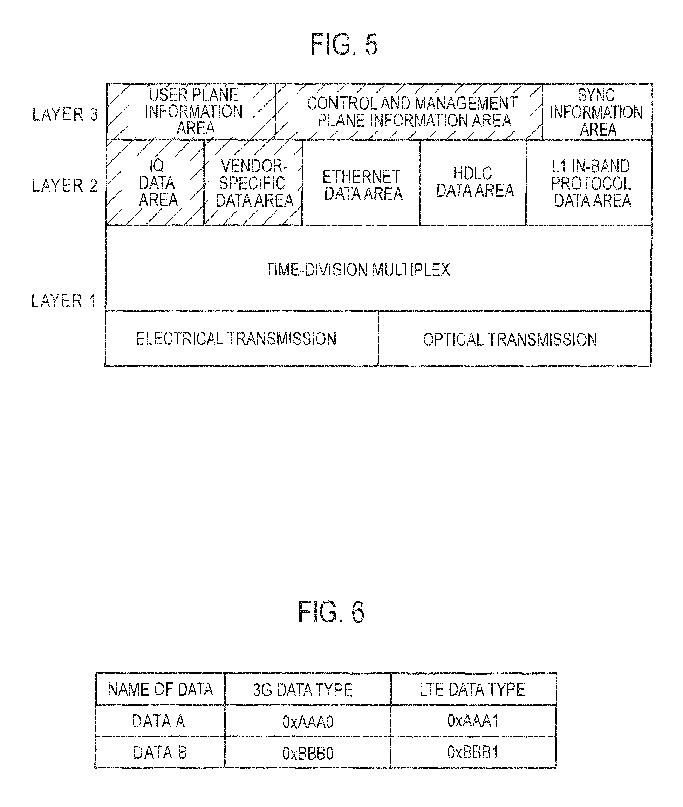

Fig. 5 shows a protocol stack which is used in the present embodiment. As shown in Fig. 5, as a layer 3 level, "User plane information area", "Control and management plane information area", and "Synchronization (SYNC) information area" are provided.

Also, as a layer 2 level, "IQ data area", "Vendor-specific data area", "Ethernet (registered trademark) data area", "HDLC data area", and "L1 in-band protocol data area" are provided.

Furthermore, as a layer 1 level, a protocol (an interface) for time-division multiplex, electrical transmission or optical transmission is provided. Note that the protocol stack shown in Fig. 5 is standardized by the Specification of the CPRI (see, http://www.cpri.info/downloads/CPRI_v_4_0_2008-06-30.pdf)

Among the group of these protocols, one shown by the diagonal line is subjected to data migration by the data migrating unit between the logical links. Specifically, data which is transmitted to and received from the "user plane information area", "control and management plane information area", "IQ data area", and "vendor-specific data area" (hereinafter, migration-targeted data) is migrated between the logical links.

On the other hand, with regard to a group of protocols other than the above-described one, the data between the logical links is not migrated and terminates in each logical link.

The data migrating unit 111 migrates a migration-targeted data assigned to a predetermined position in a frame which is received via the logical link L11h (the logical link L12h) with the REC 21 (or the REC 22) to a predetermined position f a frame to be transmitted via the logical link L21h with the RE 30. Note that the position on the frame of the migration-targeted data is defined in the Specification of the CPRI.

In addition, the data migrating unit 111 migrates the migration-targeted data assigned to a predetermined position in the frame received via the logical link L21h with the RE 30 to the predetermined position of the frame to be transmitted via the logical link L11h (logical link L12h) with the REC 21 (or the REC 22) based on the notification of the identifier determination result from the identifier processing unit 113.

The data migrating unit 111 executes the above-described processing, so that data relating to the protocol of the lower layers (layers 1 and 2) terminates in each logical link and the migration-targeted data using the protocol of the upper layers (layers 2 and 3) terminates not in the relay device 100 but between the REC 21 (the REC 22) and the RE 30.

### (5) Processing of Identifier Processing Unit 113

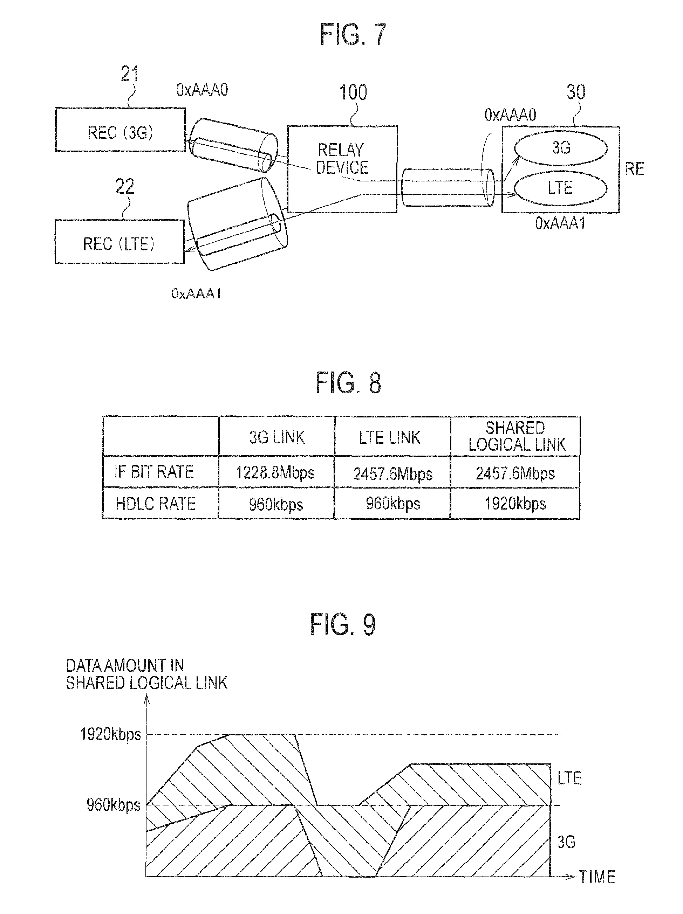

Fig. 6 shows an example of an identifier given for each data type in the layer 3. Also, Fig. 7 shows an example of identifying data when the identifier is used.

As shown in Fig. 6, in the embodiment, "0" is assigned as an identifier of the 3G while "1" is assigned as an identifier of the LTE. Although specific data in the layer 3 (for example, data A) is used both in the 3G and LTE, the identifier processing unit 113 assigns "0xAAA0" as an identifier of data A of the 3G. On the other hand, the identifier processing unit 113 assigns "0xAAA1" as an identifier of data A of the LTE. Similarly, the identifier processing unit 113 assigns "0xBBB0" as an identifier of data B of the 3G and assigns "0xBBB1" as an identifier of data B of the LTE.

Also, as described above, in the embodiment, a shared logical link (the logical link L21h) is used. The data of the both systems are mixed in the "HDLC data area" which uses the same format in the 3G and LTE. For this reason, the identifier processing unit 113 identifies the data of HDLC in the 3G from the data of HDLC in the LTE using one bit as described above.

In addition, as shown in Fig. 7, with regard to an uplink (a direction from the RE to the REC), the relay device 100 (the identifier processing unit 113) determines based on the identifier if the received data A is used either in the 3G or LTE. Note that the RE 30 performs the determination processing on a downlink (a direction from the REC to the RE).

### (6) Processing of Rate Setting unit 115

Fig. 8 shows an example of setting a transmission rate of HDLC in the logical link. Also, Fig. 9 shows an example of changes in a data amount in the shared logical link (the logical link L21h).

In the shared logical link (the logical link L21h), if a value of the transmission rate of HDLC data (hereinafter, an HDLC rate) is not properly set, data retention is caused in the relay processing unit 110 to cause delay or discard of data. Also, if a large volume of data is generated, the processing load in the relay processing unit 110 becomes high, which may cause a failure. Thus, it is not preferable.

In the embodiment, the rate setting unit 115 sets an HDLC rate shown in Fig. 8. Specifically, the HDLC rates of the logical link L11h (the 3G link in the drawing) and the logical link L12h (the LTE link in the drawing) are set so as to be 960 kbps.

Also, the HDLC rate of the shared logical link (the logical link L21h) is set so as to be 1920 kbps. Note that the entire transmission rate of the logical link L11h (IF bit rate) is 1228.8 Mbps and the IF bit rate of the logical link L12h and the logical link L21h is 2457.6 Mbps.

In other words, the rate setting unit 115 sets an HDLC rate in the shared logical link so as to be a total value of the HDLC rates of the logical link L11h (the 3G link) and the logical link L12h (the LTE link). Also, the rate setting unit 115 assigns a half of the HDLC data amount in the direction from the RE to the REC (the uplink direction) to each of the 3G and LTE and sets so that the HDLC data amount would not exceed 960 kbps.

For this reason, as shown in Fig. 9, the HDLC data for the 3G and LTE is always relayed without being retained, so that the delay and discard of the HDLC data are suppressed.

### (7) Operations and Effects

According to the relay device 100, the shared logical link (the logical link L21h) which is connected to the RE 30 is shared by the data which is transmitted to and received from the REC 21 and the REC 22. Also, the data migrating unit 111 migrates the data between the logical link L11h which is connected to the REC 21 and the shared logical link and between the logical link L12h which is connected to the REC 22 and the shared logical link according to the interface specification of the CPRI.

For this reason, the REC 21 and the REC 22 can share the RE 30 while complying with the interface specification of the CPRI. In other word, there is no need to separately provide the RE/REC system for the 3G and the RE/REC system for the LTE. Thus, the RE 30 can be effectively utilized. Also, a single link can be employed between the RE 30 and the relay device 100 without using a multi-link of the LAPB by the processing of the above-described data migrating unit 111. Thus, there is no need to modify the RE 30 which is originally compatible only for the single link.

In other words, according to the relay device 100, the RECs of multiple mobile communication systems having different radio communication schemes (the 3G/LTE) can share the RE while using the standardized interface specification which connects the RE and the REC.

In the embodiment, the identifier processing unit 113 adds one bit identifier which identifies the 3G or LTE to the data. For this reason, the RE 30 and the relay device 100 can identify the 3G and the LTE by determining only one bit. In other words, the identifier processing unit 113 does not require a new protocol or a header for identifying the 3G and the LTE to be added and can use already-existing systems. Thus, a development scale along with the sharing of the RE 30 can be suppressed and the processing load can be reduced in the relay device 100 and the like.

In the embodiment, the rate setting unit 115 sets the HDLC rates of the logical link L11h and the logical link L12h are both set so as to be 960 kbps, and the HDLC rate of the shared logical link (the logical link L21h) is set so as to be 1920 kbps. When the retention of the HDLC data is caused, the processing of the relay device 100 becomes larger, which might affect the transmission processing of the user plane. In the embodiment, the data retention and buffer overflow are not caused in the relay device 100. Thus, the relay device 100 does not need to include a function to deal with the data retention or the buffer overflow, so that the function of the relay device 100 can be simplified.

### (8) Other Embodiments

As described above, the contents of the present invention have been disclosed through the above-described embodiments. However, it should not be understood that the description and the drawings, which constitute one part of this disclosure, are to limit the present invention. Various alternative embodiments will be obvious for those who are in the art from this disclosure.

For example, in the above-described embodiment of the present invention, the description is given of the case of the 3G and LTE as an example. However, the applicable range of the invention is not limited to these systems. For example, the present invention can be applied to a radio communication system such as WiMAX.

Also, the function of the relay device 100 may be realized by hardware or a software module which is executed by a processor. Or, it may be realized by the combination of hardware and software.

It is natural that the present invention includes various embodiments which are not described herein. Accordingly, the technical scope of the present invention is defined only by particular matters of the invention according to the scope of claims which is appropriate from the above description.

Note that the contents of Japan Patent Application Publication No. 2009-286656 (filed on December 17, 2009) are incorporated herein by reference in their entirety.

### INDUSTRIAL APPLICABILITY

The present invention can provide a relay device with which radio equipment controllers (RECs) of multiple mobile communication systems having different communication schemes can share a radio equipment device (RE) while using the standardized interface specification which connects the RE and the RECs.

### EXPLANATION OF THE REFERENCE NUMERALS

10...Radio base station
21, 22...Radio equipment controller (REC)
30...Radio equipment device (RE)
100...Relay device
101, 103...REC connecting unit
105...RE connecting unit
110...Relay processing unit
111...Data migrating unit
113...Identifier processing unit
115...Rate setting unit
200...Mobile station
L11, L12, L21...Physical link
L11h, L12h, L21h...Logical link
RS...Radio signal

## Claims

1. A relay device connected to:
a radio equipment device configured to transmit and receive a radio signal to and from a mobile station;
a first controller configured to control the radio equipment device according to a first radio communication scheme; and
a second controller configured to control the radio equipment device according to a second radio communication scheme different from the first radio communication scheme, and configured to relay data transmitted and received between the radio equipment device and the first controller and between the radio equipment device and the second controller,
the relay device comprising:
a first connecting unit configured to be connected to the first controller via a first logical link;
a second connecting unit configured to be connected to the second controller via a second logical link;
a radio equipment device connecting unit configured to be connected to the radio equipment device via a shared logical link; and
a data migrating unit configured to migrate the data between the first logical link and the shared logical link and between the second logical link and the shared logical link, wherein
the shared logical link is shared by the data which is transmitted and received by the first controller and the second controller, and
the data migrating unit migrates the data according to a predetermined standardized interface specification.

2. The relay device according to claim 1, comprising an identifier processing unit configured to add an identifier to the data, the identifier identifying either the first radio communication scheme or the second radio communication scheme.

3. The relay device according to claim 2, wherein the identifier processing unit determines a destination of the data to be relayed based on the identifier contained in the data received from the radio equipment device.

4. The relay device according to claim 1, wherein transmission control is performed based on a LAPB based on an HDLC in the first logical link, the second logical link, the shared logical link, and
the LAPB is a single link procedure to define only one logical link for one physical link.
